# EUROPÄISCHE PATENTSCHRIFT

(11) **EP 2 514 019 B1**
(45) Veröffentlichungstag und Bekanntmachung des Hinweises auf die Patenterteilung: **18.06.2014**
(21) Anmeldenummer: 10781846.0
(22) Anmeldetag: 22.11.2010
(51) Int. Cl.: H01M 10/052, H01M 10/0567, H01M 2/16, H01M 10/42

(54) **LITHIUM-IONEN-BATTERIE**
LITHIUM-ION BATTERY
BATTERIE LITHIUM-ION

(30) Priorität: 17.12.2009 DE 102009058606
(43) Veröffentlichungstag der Anmeldung: 24.10.2012
(73) Patentinhaber: Li-Tec Battery GmbH, 01917 Kamenz (DE)
(72) Erfinder: EICHINGER, Guenter, 63674 Altenstadt (DE)
(74) Vertreter: Wallinger, Michael
(86) Internationale Anmeldenummer: PCT/EP2010/007063
(87) Internationale Veröffentlichungsnummer: WO 2011/072792

(56) Entgegenhaltungen:
- EP-A1- 1 256 996
- WO-A1-2004/021475
- WO-A2-2004/049471
- DE-A1- 10 347 570
- JP-A- 8 007 923
- US-A1- 2004 038 130
- US-B2- 6 960 410

## Beschreibung

Die vorliegende Erfindung betrifft eine Sekundärbatterie, insbesondere eine Lithium-Ionen-Batterie, mit verbesserten Eigenschaften, beispielsweise einem verringerten Kapazitätsverlust bei der Formatierung bzw. im Lade-/Entlade-Betrieb. Die Erfindung betrifft auch ein Verfahren zur Herstellung der Batterie sowie deren Verwendung.

Sekundärbatterien, insbesondere Lithium-Ionen-Sekundärbatterien, werden wegen ihrer hohen Energiedichte und hohen Kapazität als Antriebskraft für mobile Informationsvorrichtungen eingesetzt. Darüber hinaus kommen derartige Batterien auch für Werkzeuge, elektrisch betriebene Automobile und für Automobile mit Hybridantrieb zum Einsatz.

An derartige Batterien werden hohe Anforderungen im Hinblick auf Kapazität und Energiedichte gestellt. Im Sinne der vorliegenden Erfindung ist zum Erreichen der gewünschten Eigenschaften unter anderem auch vorteilhaft, dass die Poren der in der Batterie enthaltenen Elektroden und insbesondere des Separators möglichst gleichmäßig und vollständig mit Elektrolyt befüllt sein müssen. Das vollständige Befüllen besagter Poren ist aber im Allgemeinen aufwändig, da in den Poren enthaltenes Gas vom Elektrolyt verdrängt werden muss. Dies ist ein relativ langsamer und auch meist nicht quantitativ ablaufender Prozess. Verfahren, bei denen das Gas vor dem Befüllen im Vakuum entfernt werden soll, sind kaum reproduzierbar zu realisieren.

US 6,960,410 B2 (WO 02/091497 A2) schlägt vor, dem Elektrolyt für Lithium-Ionen-Batterien eine Fluor-haltige nichtionische Substanz zuzusetzen, um die Impedanz zwischen Elektrolyt und Elektrode zu erniedrigen.

EP 1 256 996 A1 betrifft die Verbesserung der Imprägniereigenschaft eines Elektrolyten in einer Lithiumsekundärzelle, wobei eine Verbindung der Formel A1-X-A2 in der Lithiumsekundärzelle enthalten ist, in welcher X ein Gruppe-VI-Element des Periodensystems ist, und A1 und A2 eine aromatische Gruppe ist, vorausgesetzt, dass A1 und A2 gleich oder verschieden sein und miteinander unter Bildung eines Rings verbunden sein können.

US 2004/0038130 A1 betrifft eine Lithiumsekundärzelle, die im Elektrolyten eine Substanz aufweist, welche die Benetzbarkeit des im Elektrolyten verwendeten nichtwässrigen Lösungsmittels für den Separator verbessert.

JP 8007923 betrifft eine Lithiumsekundärzelle, bei der eine Verbindung mit Perfluorogruppen die Lade-/Entlade-Eigenschaften der Zelle unterstützt.

Aufgabe der vorliegenden Erfindung ist es, eine Lithium-Ionen-Sekundärbatterie, bereitzustellen, bei der die Poren der Elektroden und des Separators so mit Elektrolyt befüllt sind bzw. mit Elektrolyt befüllt werden können, dass die Kapazität einer Batterie im Lade-/EntladeBetrieb möglichst hoch gehalten werden kann.

Diese Aufgabe wird mit einer Lithium-Ionen-Batterie nach Ansprüch 1 gelöst.

Im Folgenden werden die Begriffe *"Lithium-Ionen-Batterie"* und *"Lithium-Ionen-Sekundärbatterie"* synonym verwendet. Die Begriffe schließen auch die Begriffe *"Lithium-Batterie" "Lithium-Ionen-Akkumulator"* und *"Lithium-Ionen-Zelle"* ein. Ein Lithium-Ionen-Akkumulator besteht im Allgemeinen aus einer Serien- bzw. Reihenschaltung einzelner Lithium-Ionen-Zellen. Dies bedeutet, dass der Begriff *"Lithium-Ionen-Batterie"* als Sammelbegriff für die im Stand der Technik gebräuchlichen vorgenannten Begriffe verwendet wird.

Der Begriff *"positive Elektrode"* bedeutet die Elektrode, die bei Anschluss der Batterie an einen Verbraucher, beispielsweise an einen Elektromotor, in der Lage ist, Elektronen aufzunehmen. Dann ist die positive Elektrode die Kathode. Der Begriff *"negative Elektrode"* bedeutet die Elektrode, die bei Betrieb in der Lage ist, Elektronen abzugeben. Dann ist die negative Elektrode die Anode.

Die Anode (a) der erfindungsgemäßen Batterie kann aus einer Vielzahl von Materialien hergestellt werden, die für die Verwendung einer Batterie mit Lithium-Ionen-Elektrolyten geeignet sind. Beispielsweise kann die negative Elektrode Lithium-Metall oder Lithium in Form einer Legierung enthalten, entweder in Form einer Folie, eines Gitters oder in Form von Partikeln, die durch ein geeignetes Bindemittel zusammengehalten werden. Die Verwendung von Lithium-Metall-Oxiden wie Lithium-Titan-Oxid ist gleichfalls möglich. Grundsätzlich können alle Materialien verwendet werden, die in der Lage sind, mit Lithium Interkalationsverbindungen zu bilden. Geeignete Materialien für die negative Elektrode umfassen dann beispielsweise Graphit, synthetischen Graphit, Ruß, Mesokohlenstoff, dotierten Kohlenstoff, Fullerene, Niobpentoxid, Zinnlegierungen, Titandioxid, Zinndioxid, und Mischungen dieser Substanzen.

Die Kathode (b) der erfindungsgemäßen Batterie umfasst vorzugsweise eine Verbindung mit der Formel LiMPO₄, wobei M wenigstens ein Übergangsmetallkation der ersten Reihe des Periodensystems der Elemente ist, wobei dieses Übergangsmetallkation vorzugsweise aus der Gruppe bestehend aus Mn, Fe, Ni und Ti oder einer Kombination dieser Elemente gewählt ist, und wobei die Verbindung vorzugsweise eine Olivinstruktur aufweist, vorzugsweise übergeordnetes Olivin, wobei Fe besonders bevorzugt ist.

Für die erfindungsgemäße Lithium-Ionen-Batterie kann ein Lithiumeisenphosphat mit Olivinstruktur der Summenformel LiFePO₄ eingesetzt werden. Es ist aber auch möglich, ein Lithiumeisenphosphat, das ein Element M enthält ausgewählt aus der Gruppe bestehend aus Mn, Cr, Co, Cu, Ni, V, Mo, Ti, Zn, Al, Ga, B und Nb zu verwenden. Ferner ist es auch möglich, dass das Lithiumeisenphosphat zur Erhöhung der Leitfähigkeit Kohlenstoff enthält.

In einer weiteren Ausführungsform weist das für die Herstellung der positiven Elektrode verwendete Lithiumeisenphosphat mit Olivinstruktur die Summenformel LiₓFe_{1-y}M_{y}PO₄ auf, wobei M mindestens ein Element darstellt ausgewählt aus der Gruppe bestehend aus Mn, Cr, Co, Cu, Ni, V, Mo, Ti, Zn, Al, Ga, B und Nb, mit 0,05 ≤ x ≤ 1,2 und 0 ≤ y ≤ 0,8.

In einer Ausführungsform ist x = 1 und y = 0.

Die positive Elektrode enthält das Lithiumeisenphosphat vorzugsweise in Form von Nanopartikeln. Die Nanopartikel können eine beliebige Form annehmen, das heißt, sie können grob-sphärisch oder langgestreckt sein.

In einer Ausführungsform weist das Lithiumeisenphosphat eine Partikelgröße gemessen als D₉₅-Wert von kleiner als 15 µm auf. Vorzugsweise ist die Partikelgröße kleiner als 10 µm.

In einer weiteren Ausführungsform weist das Lithiumeisenphosphat eine Partikelgröße gemessen als D₉₅-Wert zwischen 0,005 µm bis 10 µm auf.

In einer weiteren Ausführungsform weist das Lithiumeisenphosphat eine Partikelgröße gemessen als D₉₅-Wert von kleiner 10 µm auf, wobei der D₅₀-Wert 4 µm ± 2 µm beträgt und der D₁₀-Wert kleiner als 1,5 µm ist.

Die angegebenen Werte können durch Messung unter Verwendung der statischen Laserlichtstreuung (Laserbeugung, Laser-Diffraktometrie) bestimmt werden. Die Verfahren sind aus dem Stand der Technik bekannt.

Die Kathode kann gemäß einer bevorzugten Ausführungsform auch ein Lithiummanganat, vorzugsweise LiMn₂O₄ vom Spinell-Typ, ein Lithiumkobaltat, vorzugsweise LiCoO₂, oder ein Lithiumnickelat, vorzugsweise LiNiO₂, oder ein Gemisch aus zwei oder drei dieser Oxide, oder ein Lithiummischoxid, welches Nickel, Mangan und Kobalt (NMC) enthält, umfassen.

Die Kathode umfasst in einer bevorzugten Ausführungsform zumindest ein Aktivmaterial aus einem Lithium-Nickel-Mangan-Kobalt-Mischoxid (NMC), welches nicht in einer Spinellstruktur vorliegt, in einer Mischung mit einem Lithium-Mangan-Oxid (LMO) in Spinellstruktur.

Bevorzugt ist es, dass das Aktivmaterial zumindest 30 Mol%, vorzugsweise zumindest 50 Mol% NMC umfasst sowie zugleich zumindest 10 Mol%, vorzugsweise zumindest 30 Mol% LMO, jeweils bezogen auf die Gesamtmolzahl des Aktivmaterials der kathodischen Elektrode (also nicht bezogen auf die kathodische Elektrode insgesamt, welche zusätzlich zum Aktivmaterial noch Leitfähigkeitszusätze, Bindemittel, Stabilisatoren etc. umfassen kann).

Bevorzugt ist es, dass NMC und LMO *zusammen* zumindest 60 Mol% des Aktivmaterials ausmachen, weiter bevorzugt zumindest 70 Mol%, weiter bevorzugt zumindest 80 Mol%, weiter bevorzugt zumindest 90 Mol%, jeweils bezogen auf die Gesamtmolzahl des Aktivmaterials der kathodischen Elektrode (also nicht bezogen auf die kathodische Elektrode insgesamt, welche zusätzlich zum Aktivmaterial noch Leitfähigkeitszusätze, Bindemittel, Stabilisatoren etc. umfassen kann).

Prinzipiell bestehen bezüglich der Zusammensetzung des Lithium-Nickel-Mangan-Kobalt-Mischoxides keine Einschränkungen, außer dass dieses Oxid neben Lithium zumindest jeweils 5 Mol%, bevorzugt jeweils zumindest 15 Mol%, weiter bevorzugt jeweils zumindest 30 Mol% an Nickel, Mangan und Kobalt enthalten muss, jeweils bezogen auf die Gesamtmolzahl an Übergangsmetallen im Lithium-Nickel-Mangan-Kobalt-Mischoxid. Das Lithium-Nickel-Mangan-Kobalt-Mischoxid kann mit beliebigen anderen Metallen, insbesondere Übergangsmetallen dotiert sein, solange sichergestellt ist, dass die oben genannten molaren Mindestmengen an Ni, Mn und Co vorliegen.

Dabei ist ein Lithium-Nickel-Mangan-Kobalt-Mischoxid der folgenden Stöchiometrie besonders bevorzugt: Li[Co_{1/3}Mn_{1/3}Ni_{1/3}]O₂, wobei der Anteil an Li, Co, Mn, Ni und O jeweils um +/- 5 % variieren kann.

In der positiven Elektrode (b) werden das verwendete Lithium-Eisenphosphat bzw. das oder die Lithiumoxid(e) sowie die für die negative Elektrode (a) verwendeten Materialien im Allgemeinen durch ein Bindemittel, das diese Materialien auf der Elektrode hält, zusammengehalten. Beispielsweise können polymere Bindemittel verwendet werden. Als Bindemittel können vorzugsweise Polyvinylidenfluorid, Polyethylenoxid, Polyethylen, Polypropylen, Polytetrafluorethylen, Polyacrylat, Ethylen-(Propylen-Dien-Monomer)-Copolymer (EPDM) und Mischungen und Copolymere davon verwendet werden.

Der für die Batterie verwendete Separator (c) muss für Lithium-Ionen durchlässig sein, um den Ionentransport für Lithium-Ionen zwischen der positiven und der negativen Elektrode zu gewährleisten. Andererseits muss der Separator für Elektronen isolierend sein.

Der Separator der erfindungsgemäßen Batterie umfasst ein Vlies aus ungewebten Polymerfasern, auch als *"non-woven fabrics"* bekannt, die elektrisch nicht leitend sind. Der Begriff "*Vlies*"wird synonym mit Begriffen wie *"Gewirke"* oder *"Filz"* verwendet. Statt des Begriffs *"ungewebt"* wird auch der Begriff *"nicht verwebt"* verwendet.

Vorzugsweise ist das Vlies flexibel und weist eine Dicke von weniger als 30 µm auf. Verfahren zur Herstellung derartiger Vliese sind aus dem Stand der Technik bekannt.

Vorzugsweise werden die Polymerfasern ausgewählt aus der Gruppe von Polymeren bestehend aus Polyacrylnitril, Polyolefin, Polyester, Polyimid, Polyetherimid, Polysulfon, Polyamid, Polyether.

Geeignete Polyolefine sind beispielsweise Polyethylen, Polypropylen, Polytetrafluorethylen, Polyvinylidenfluorid.

Bevorzugte Polyester sind vorzugsweise Polyethylenterephthalate.

Der für die Erfindung eingesetzte Separator umfasst ein Vlies, welches ein- oder beidseitig mit einem anorganischen Material beschichtet ist. Der Begriff *"Beschichtung"* beinhaltet auch, dass sich das ionenleitende anorganische Material nicht nur auf einer Seite oder beiden Seiten des Vlieses befinden kann, sondern auch innerhalb des Vlieses. Das für die Beschichtung verwendete Material ist vorzugsweise wenigstens eine Verbindung aus der Gruppe der Oxide, Phosphate, Sulfate, Titanate, Silikate, Aluminosilikate wenigstens eines der Elemente Zirkon, Aluminium oder Lithium.

Das ionenleitende anorganische Material ist vorzugsweise in einem Temperaturbereich von - 40 °C bis 200 °C ionenleitend, d.h. ionenleitend für die Lithium-Ionen.

In einer bevorzugten Ausführungsform umfasst oder besteht das ionenleitende Material aus Zirkonoxid.

Es wird erfindungsgemäß ein Separator verwendet, welcher aus einem zumindest teilweise stoffdurchlässigen Träger besteht, welcher nicht oder nur schlecht elektronenleitend ist. Dieser Träger ist auf mindestens einer Seite mit einem anorganischen Material beschichtet. Als wenigstens teilweise stoffdurchlässiger Träger wird ein organisches Material verwendet, welches als nichtverwebtes Vlies ausgestaltet ist. Das organische Material ist in Form von Polymerfasern ausgestaltet, vorzugsweise Polymerfasern des Polyethylenterephthalats (PET). Das Vlies ist mit einem anorganischen ionenleitenden Material beschichtet, welches vorzugsweise in einem Temperaturbereich von - 40 °C bis 200 °C ionenleitend ist. Das anorganische ionenleitende Material umfasst bevorzugt wenigstens eine Verbindung aus der Gruppe der Oxide, Phosphate, Sulfate, Titanate, Silikate, Aluminosilikate mit wenigstens einem der Elemente Zirkon, Aluminium, Lithium, besonders bevorzugt Zirkonoxid. Bevorzugt weist das anorganische ionenleitende Material Partikel mit einem größten Durchmesser unter 100 nm auf.

Ein solcher Separator wird beispielsweise unter dem Handelsnamen *"Separion*^{®}*"* von der Firma Evonik AG in Deutschland vertrieben.

Verfahren zur Herstellung derartiger Separatoren sind aus dem Stand der Technik bekannt, beispielsweise aus der EP 1 017 476 B1, WO 2004/021477 und WO 2004/021499.

Prinzipiell können zu große Poren und Löcher in Separatoren, die in Sekundärbatterien verwendet werden, zu einem inneren Kurzschluss führen. Die Batterie kann sich dann in einer gefährlichen Reaktion sehr schnell selbst entladen. Hierbei können so große elektrische Ströme auftreten, dass eine geschlossene Batteriezelle im ungünstigsten Fall sogar explodieren kann. Aus diesem Grund kann der Separator entscheidend zur Sicherheit bzw. zur fehlenden Sicherheit einer Lithiumhochleistungs- oder Lithiumhochenergie-Batterie beitragen.

Polymerseparatoren unterbinden im Allgemeinen ab einer bestimmten Temperatur (der sogenannten *"Shut-Down-Temperatur"* die bei ca. 120 °C liegt) jeglichen Stromtransport durch den Elektrolyten. Dies geschieht dadurch, dass bei dieser Temperatur das Porengefüge des Separators zusammenbricht und alle Poren verschlossen werden. Dadurch, dass keine Ionen mehr transportiert werden können, kommt die gefährliche Reaktion, die zur Explosion führen kann, zum Erliegen. Wird die Zelle aufgrund äußerer Umstände aber weiter erwärmt, so wird bei ca. 150 bis 180 °C die sogenannte *"Break-Down-Temperatur"* überschritten. Ab dieser Temperatur kommt es zum Schmelzen des Separators, wobei dieser sich zusammenzieht. An vielen Stellen in der Batteriezelle kommt es nun zu einem direkten Kontakt zwischen den beiden Elektroden und somit zu einem großflächigem inneren Kurzschluss. Dieser führt zur unkontrollierten Reaktion, die mit einer Explosion der Zelle enden kann, bzw. der entstehende Druck muss durch ein Überdruckventil (eine Berstscheibe) häufig unter Feuererscheinungen abgebaut werden.

Bei dem in der erfindungsgemäßen Batterie verwendeten Separator umfassend ein Vlies aus ungewebten Polymerfasern und die anorganische Beschichtung kann es nur zum Shut-Down (Abschaltung) kommen, wenn durch die hohe Temperatur das Polymergefüge des Trägermaterials schmilzt und in die Poren des anorganischen Materials eindringt und diese dadurch verschließt. Zum Break-Down (Zusammenbruch) kommt es bei dem Separator dagegen nicht, da die anorganischen Partikel dafür sorgen, dass ein völliges Schmelzen des Separators nicht eintreten kann. Somit ist sichergestellt, dass es keine Betriebszustände gibt, in denen ein großflächiger Kurzschluss entstehen kann.

Durch die Art des eingesetzten Vlieses, welches eine besonders gut geeignete Kombination aus Dicke und Porosität aufweist, können Separatoren hergestellt werden, die den Anforderungen an Separatoren in Hochleistungsbatterien, insbesondere Lithium- Hochleistungsbatterien gerecht werden können. Durch die gleichzeitige Verwendung von in ihrer Partikelgröße genau abgestimmten Oxid-Partikeln zur Herstellung der porösen (keramischen) Beschichtung wird eine besonders hohe Porosität des fertigen Separators erreicht, wobei die Poren immer noch genügend klein sind, um ein unerwünschtes Durchwachsen von *"Lithium-Whiskern"* durch den Separator zu verhindern.

Auf Grund der hohen Porosität des Separators muss allerdings dafür Sorge getragen werden, dass in den Poren kein Totraum entsteht.

Erfindungsgemäß wird das vollständige oder zumindest nahezu vollständige für die Erfindung eingesetzten Separators Befüllen der Poren des für Erfindung eingesetzten Separators mit dem Elektrolyten durch die Gegenwart der fluorhaltigen nichtionischen oberflächenaktiven Substanz (e) erreicht.

Die für die Erfindung eingesetzten Separatoren haben auch den Vorteil, dass sich an den anorganischen Oberflächen des Separatormaterials die Anionen des Leitsalzes teilweise anlagern, was zu einer Verbesserung der Dissoziation und somit zu einer besseren Ionenleitfähigkeit im Hochstrombereich führt.

Der für die erfindungsgemäße Batterie verwendete Separator, umfassend ein flexibles Vlies mit einer auf und in diesem Vlies befindlichen porösen anorganischen Beschichtung, wobei das Material des Vlieses ausgewählt ist aus ungewebten, nicht elektrisch leitfähigen Polymerfasern, zeichnet sich auch dadurch aus, dass das Vlies eine Dicke von weniger als 30 µm, eine Porosität von mehr als 50 %, vorzugsweise von 50 bis 97 % und eine Porenradienverteilung aufweist, bei der mindestens 50 % der Poren einen Porenradius von 75 bis 150 µm aufweisen.

Besonders bevorzugt umfasst der Separator ein Vlies, welches eine Dicke von 5 bis 30 µm, vorzugsweise eine Dicke von 10 bis 20 µm aufweist. Besonders wichtig ist auch eine möglichst homogene Porenradienverteilung im Vlies wie oben angegeben. Eine noch homogenere Porenradienverteilung im Vlies führt in Verbindung mit optimal abgestimmten Oxid-Partikeln bestimmter Größe zu einer optimierten Porosität des Separators.

Die Dicke des Substrates hat einen großen Einfluss auf die Eigenschaften des Separators, da zum einen die Flexibilität aber auch der Flächenwiderstand des mit Elektrolyt getränkten Separators von der Dicke des Substrates abhängig ist. Durch die geringe Dicke wird ein besonders geringer elektrischer Widerstand des Separators in der Anwendung mit einem Elektrolyten erzielt. Der Separator selbst weist einen sehr hohen elektrischen Widerstand auf, da er selbst isolierende Eigenschaften aufweisen muss. Zudem erlauben dünnere Separatoren eine erhöhte Packungsdichte in einem Batteriestapel, so dass man im gleichen Volumen eine größere Energiemenge speichern kann.

Vorzugsweise weist das Vlies eine Porosität von 60 bis 90 %, besonders bevorzugt von 70 bis 90 % auf. Die Porosität ist dabei definiert als das Volumen des Vlieses (100 %) minus dem Volumen der Fasern des Vlieses, also dem Anteil am Volumen des Vlieses, der nicht von Material ausgefüllt wird. Das Volumen des Vlieses kann dabei aus den Abmessungen des Vlieses berechnet werden. Das Volumen der Fasern ergibt sich aus dem gemessen Gewicht des betrachteten Vlieses und der Dichte der Polymerfasern. Die große Porosität des Substrates ermöglicht auch eine höhere Porosität des Separators, weshalb eine höhere Aufnahme an Elektrolyten mit dem Separator erzielt werden kann.

Damit ein Separator mit isolierenden Eigenschaften erhalten werden kann, weist dieser als Polymerfasern für das Vlies vorzugsweise nicht elektrisch leitfähige Fasern von Polymeren auf wie oben definiert, die vorzugsweise ausgewählt sind aus Polyacrylnitril (PAN), Polyester, wie z. B. Polyethylenterephthalat (PET) und/oder Polyolefin (PO), wie z. B. Polypropylen (PP) oder Polyethylen (PE), oder Mischungen solcher Polyolefine.

Die Polymerfasern der Vliese weisen vorzugsweise einen Durchmesser von 0,1 bis 10 µm, besonders bevorzugt von 1 bis 4 µm auf.

Besonders bevorzugte flexible Vliese weisen ein Flächengewicht von kleiner 20 g/m², vorzugsweise von 5 bis 10 g/m² auf.

Der für die Erfindung eingesetzte Separator weist auf und im Vlies eine poröse, elektrisch isolierende, keramische Beschichtung auf. Vorzugsweise weist die auf und in dem Vlies befindliche poröse anorganische Beschichtung Oxid-Partikel der Elemente Li, Al, Si und/oder Zr mit einer mittleren Partikelgröße von 0,5 bis 7 µm, bevorzugt von 1 bis 5 µm und ganz besonders bevorzugt von 1,5 bis 3 µm auf. Besonders bevorzugt weist der Separator eine auf und in dem Vlies befindliche poröse anorganische Beschichtung auf, die Aluminiumoxid- Partikel mit einer mittleren Partikelgröße von 0,5 bis 7 µm, bevorzugt von 1 bis 5 µm und ganz besonders bevorzugt von 1,5 bis 3 µm aufweist, die mit einem Oxid der Elemente Zr oder Si verklebt sind. Um eine möglichst hohe Porosität zu erzielen, liegen bevorzugt mehr als 50 Gew.-% und besonders bevorzugt mehr als 80 Gew.% aller Partikel in den oben genannten Grenzen der mittleren Partikelgröße. Wie bereits oben beschrieben beträgt die maximale Partikelgröße vorzugsweise 1/3 bis 1/5 und besonders bevorzugt kleiner oder gleich 1/10 der Dicke des eingesetzten Vlieses.

Vorzugsweise weist der Separator eine Porosität von 30 bis 80 %, bevorzugt von 40 bis 75 % und besonders bevorzugt von 45 bis 70 % auf. Die Porosität bezieht sich dabei auf die erreichbaren, also offenen Poren. Die Porosität kann dabei mittels der bekannten Methode der Quecksilber-Porosimetrie bestimmt werden oder kann aus dem Volumen und der Dichte der verwendeten Einsatzstoffe errechnet werden, wenn davon ausgegangen wird, dass nur offene Poren vorliegen.

Die für die erfindungsgemäße Batterie verwendeten Separatoren zeichnen sich auch dadurch aus, dass sie eine Reißfestigkeit von mindestens 1 N/cm, vorzugsweise von mindestens 3 N/cm und ganz besonders bevorzugt von 3 bis 10 N/cm aufweisen können. Die Separatoren lassen sich vorzugsweise ohne Beschädigung bis auf jeden Radius bis herab zu 100 mm, vorzugsweise bis herab zu 50 mm und ganz besonders bevorzugt bis herab zu 1 mm biegen. Die hohe Reißfestigkeit und die gute Biegbarkeit des Separators haben den Vorteil, dass beim Laden und Entladen einer Batterie auftretende Veränderungen der Geometrien der Elektroden durch den Separator mitgemacht werden können, ohne dass dieser beschädigt wird. Die Biegbarkeit hat zudem den Vorteil, dass mit diesem Separator kommerziell standardisierte Wickelzellen produziert werden können. Bei diesen Zellen werden die Elektroden/Separator-Lagen in standardisierter Größe miteinander spiralförmig aufgewickelt und kontaktiert.

Elektrolyte (d) für Lithium-Ionen-Batterien beinhalten eine Vielzahl von Lithiumsalzen. Bevorzugte Lithiumsalze weisen inerte Anionen auf und sind nicht-toxisch. Geeignete Lithium-Salze sind vorzugsweise Lithiumhexafluorophosphat, Lithiumhexafluoroarsenat, Lithium-bis(tri-fluoromethylsulfonylimid), Lithiumtrifluoromethansulfonat, Lithium-tris(tri-fluoromethylsulfonyl)-methid, Lithiumtetrafluoroborat, Lithiumperchlorat, Lithiumtetrachloraluminat, Lithiumchlorid, und Mischungen davon.

In einer Ausführungsform wird das Lithiumsalz ausgewählt aus LiPF₆, LiBF₄, LiClO₄, LiAsF₆, LiCF₃SO₃, LiN(CF₃SO₂)₂, LiC(CF₃SO₂)₃, LiSO₃CₓF₂ₓ₊₁, LiN(SO₂CₓF₂ₓ₊₁)₂ oder LiC(SO₂CₓF₂ₓ₊₁)₃ mit 0 ≤ x ≤ 8, und Mischungen von zwei oder mehreren dieser Salze.

Vorzugsweise liegt der Elektrolyt als Elektrolytlösung vor. Geeignete Lösungsmittel sind vorzugsweise inert. Geeignete Lösungsmittel umfassen beispielsweise Ethylencarbonat, Propylencarbonat, Butylencarbonat, Dimethylcarbonat, Diethylcarbonat, Ethylmethylcarbonat, Methylpropycarbonat, Butylmethylcarbonat, Ethylpropylcarbonat, Dipropylcarbonat, Cyclopentanone, Sulfolane, Dimethylsufoxid, 3-Methyl-1,3-oxazolidine-2-on, γ-Butyrolacton, 1,2-Diethoxymethan, Tetrahydrofuran, 2-Methyltetrahydrofuran, 1,3-Dioxolan, Methylacetat, Ethylacetat, Nitromethan, 1,3-Propansulton, und Mischungen aus zwei oder mehreren dieser Lösungsmittel.

Der Begriff "fluorhaltige nichtionische *oberflächenaktive Substanz"* in Komponente (e) bedeutet eine Substanz, die aufgrund zumindest eines hydrophilen und zumindest eines hydrophoben Strukturteils die Grenzflächenspannung zwischen einer festen Oberfläche und einer Flüssigkeit herabzusetzen vermag. Als Folge bleibt die Flüssigkeit auf der festen Oberfläche zumindest teilweise haften, ohne von dieser abzufließen oder abzuperlen.

Derartige oberflächenaktive Substanzen, in der Fachliteratur häufig auch als *"Netzmittel"* bezeichnet, sind aus dem Stand der Technik bekannt.

Die in der erfindungsgemäßen Batterie verwendete fluorhaltige nichtionische oberflächenaktive Substanz (e) ist ausgewählt aus Carbonsäureestern und Carbonsäureamiden, Sulfonsäureestern und Sulfonsäureamiden, Alkylpolyethylenglykolen und -ethern, Polyalkylenglykolethern.

Carbonsäureester und -amide sind vorzugsweise Fettsäureester und Fettsäureamide, vorzugsweise Fettsäurepolyglykolether und Fettsäureamidpolygylkolether.

Sulfonsäureester und Sulfonsäureamide sind vorzugsweise Alkyl- und/oder Arylsulfonsäureester und -amide. Exemplarisch seien genannt Benzolsulfonsäuester und -amide, Dodecylbenzolsulfonsäureester und -amide, Benzolsulfonsäuredodecylester.

Alkylpolyethylenglykole sind vorzugsweise Alkylphenolpolygylkotether (Alkylphenolethoxylate).

Als Vertreter eines Polyalkylenglykolethers sei als Beispiel Polyoxyethylen-2-stearylether genannt.

Vertreter der genannten fluorhaltigen nichtionischen oberflächenaktiven Substanzen (e) sind kommerziell erhältlich. Sie stellen lediglich Beispiele einer oberflächenaktiven Substanz dar, begrenzen die oberflächenaktive Substanz (e) jedoch nicht auf die genannten Beispiele.

Die für die Erfindung eingesetzte oberflächenaktive Substanz ist fluorhaltig.

Es ist bevorzugt, dass die oberflächenaktive Substanz eine Perfluoralkylgruppe aufweist.

Der Begriff *"Perfluoralkylgruppe"* bedeutet, dass alle Wasserstoffatome einer Alkylgruppe durch Fluoratome ersetzt sind.

Fluorhaltige bzw. Perfluoralkylgruppen-haltige oberflächenaktive Substanzen sind unter den in der Batterie herrschenden Bedingungen im Allgemeinen inert und/oder erzeugen keine Spaltprodukte, die den Betrieb der Batterie beeinträchtigen können.

Außerdem vermögen derartige Substanzen die Elektroden und den Separator der erfindungsgemäßen Batterie im Allgemeinen sehr gut zu benetzen. Dies erleichtert die Befüllung der in den Elektroden und im Separator enthaltenen Poren mit Elektrolyt.

Beispielhafte geeignete Verbindungen sind die bekannten oder nach bekannten Methoden herstellbaren Perfluorctancarbonsäure- und Perfluorctansulfonsäureester. Weiter genannt seien Perfluoralkylethylenglykole wie in EP 0 571 717 offenbart. Verbindungen mit Sulfongruppen wie in der US 6,960,410 offenbart seien gleichfalls genannt. Geeignet sind auch fluoraliphatische Ester, beispielsweise die unter der Handelsbezeichnung Novec^{®} bekannten fluoraliphatischen Ester, wie beispielsweise Novec^{®} FC-4430.

Die genannten Verbindungen stellen lediglich Beispiele einer fluorhaltigen oberflächenaktiven Substanz dar, begrenzen die fluorhaltige oberflächenaktive Substanz jedoch nicht auf die genannten Verbindungen.

Die Verwendung fluorhaltiger Lithiumsalze im Elektrolyt (d) kann die Wirkung der oberflächenaktiven Substanz (e) in synergistischer Weise unterstützen, insbesondere dann, wenn diese Salze gleichfalls Perfluoralkylgruppen aufweisen.

In einer Ausführungsform wird die fluorhaltige nichtionische oberflächenaktive Substanz in einer Menge von 0,001 bis 10 Gew.-% oberflächenaktive Substanz bezogen auf die Gesamtmenge an Elektrolyt eingesetzt, vorzugsweise 0,05 bis 5 Gew.-%, besonders bevorzugt 0,1 bis 1 Gew.-%.

Es wurde überraschenderweise gefunden, dass bei Verwendung der fluorhaltigen nichtionischen oberflächenaktiven Substanz (e) bei der Befüllung der Batterie mit Elektrolyt bei Formatierung der Batterie der irreversible Kapazitätsverlust im Vergleich zur Nichtverwendung der oberflächenaktiven Substanz (e) deutlich verringert werden kann. Dies ist für eine Batterie, bei der die Kapazität im Lade/EntladeBetrieb, d.h. in der Anwendung zum Betreiben beispielsweise eines Elektromotors, möglichst hoch gehalten werden soll, außerordentlich günstig.

Der Begriff *"Formatierung"* oder *"Formatieren"* oder *"Formatierung der Batterie"* oder *"Formatieren der Batterie"* bedeutet die elektrische Erstladung zur Umwandlung der aktiven Massen der Elektroden in den geladenen Zustand.

Der irreversible Kapazitätsverlust lässt sich dadurch bestimmen, dass die Kapazität der Batterie nach dem ersten Laden und nach dem ersten Entladen bzw. dem zweiten Laden und dem zweiten Entladen bestimmt wird.

Demgemäß wird in einer Ausführungsform der erfindungsgemäßen Lithium-Ionen-Batterie die fluorhaltige nichtionische oberflächenaktive Substanz vorzugsweise so ausgewählt, dass der irreversible Kapazitätsverlust bei der Formatierung der Batterie niedriger ist als der irreversible Kapazitätsverlust der Batterie, wenn diese in Abwesenheit der oberflächenaktiven Substanz formatiert wird.

Bereits kleine Verbesserungen im besagten Kapazitätsverhalten, beispielsweise um 1 bis 5 %, werden als signifikante Verbesserungen betrachtet.

Vorzugsweise wird die fluorhaltige nichtionische oberflächenaktive Substanz so ausgewählt, dass der irreversible Kapazitätsverlust höchstens 95 % des irreversiblen Kapazitätsverlusts der Batterie beträgt, wenn diese in Abwesenheit der oberflächenaktiven Substanz formatiert wird, vorzugsweise höchstens 90 %, besonders bevorzugt höchstens 85 %.

Die Kombination der negativen Elektrode (a) und der positiven Elektrode (b) mit insbesondere dem Separator (c) und dem Elektrolyt (d) und der fluorhaltigen nichtionischen oberflächenaktiven Substanz (e) resultiert in einer Lithium-Ionen-Batterie, die neben der Verringerung des irreversiblen Kapazitätsverlusts bei der Formatierung der Batterie sowie im Lade/Entlade-Betrieb vorteilhaft auch eine Verringerung des Anstiegs des Wechselstrom-Innenwiderstands nach der Formatierung, eine Verringerung des Anstiegs des Gleichspannungs-Innenwiderstands nach Lagerung der Batterie sowie eine Verringerung des Anstiegs des irreversiblen Kapazitätsverlusts nach Lagerung der Batterie aufweist.

Demgemäß ist die erfindungsgemäße Lithium-Ionen-Batterie auch dadurch gekennzeichnet, dass der Wechselstrom-Innenwiderstand bei der Formatierung der Batterie niedriger ist als der Wechsetstrom-Innenwiderstand der Batterie, wenn diese in Abwesenheit der fluorhaltigen nichtionischen oberflächenaktiven Substanz formatiert wird; und/oder der irreversible Kapazitätsverlust der Batterie nach Lagerung der Batterie niedriger ist als der irreversible Kapazitätsverlust der Batterie, wenn diese in Abwesenheit der fluorhaltigen nichtionischen oberflächenaktiven Substanz gelagert wird; und/oder der Gleichspannungs-Innenwiderstand nach Lagerung der Batterie niedriger ist als der Gleichspannungs-Innenwiderstands, wenn diese ohne oberflächenaktive Substanz gelagert wird.

Die Herstellung der erfindungsgemäßen Lithium-Ionen-Batterie kann prinzipiell nach Methoden erfolgen, wie sie im Stand der Technik bekannt sind.

Beispielsweise kann zur Herstellung der positiven Elektrode das verwendete aktive Material, beispielsweise das Lithiumeisenphosphat, als Pulver auf der Elektrode niedergeschlagen und zu einem dünnen Film verdichtet werden, gegebenenfalls unter Verwendung eines Bindemittels. Die andere Elektrode kann auf die erste Elektrode laminiert werden, wobei für die Erfindung eingesetzte Separator in Form einer Folie vorher auf die negative oder die positive Elektrode laminiert wird. Es ist auch möglich, die positive Elektrode, den Separator und die negative Elektrode gleichzeitig unter gegenseitiger Laminierung zu verarbeiten. Der Verbund aus Elektroden und dem für die Erfindung eingesetzten Separator wird dann von einem Gehäuse umgeben. Elektrolyt kann eingefüllt werden wie eingangs im Stand der Technik beschrieben.

In einer besonderen Ausführungsform umfasst das Verfahren zum Herstellen der erfindungsgemäßen Lithium-Ionen-Batterie die Stufen (i) und (ii):
(i) Einbringen der fluorhaltigen nichtionischen oberflächenaktiven Substanz (e) in die Batterie umfassend die Komponenten (a) bis (c);
(ii) Einbringen des Elektrolyten (d) in die Batterie.

Grundsätzlich ist es möglich, Stufe (i) gleichzeitig mit Stufe (ii) auszuführen. Vorzugsweise wird dann die fluorhaltige nichtionische oberflächenaktive Substanz mit dem Elektrolyt vermischt, weiter bevorzugt im Elektrolyt gelöst.

Es ist aber auch möglich, Stufe (i) vor Stufe (ii) auszuführen, oder Stufe (i) nach Stufe (ii) auszuführen. Vorzugsweise wird dann die fluorhaltige nichtionische oberflächenaktive Substanz in einem nichtwässerigen Lösungsmittel, wie es auch im Elektrolyt verwendet wird, gelöst.

Vorzugsweise kann auch das Einbringen von Elektrolyt in die Batterie gemäß Stufe (ii) beschleunigt werden im Vergleich zu einem Verfahren, das ohne die Verwendung der fluorhaltigen nichtionischen oberflächenaktiven Substanz auskommt.

Demgemäß ist es mit der erfindungsgemäßen Batterie auch möglich, den Elektrolyt beschleunigt in die Batterie gemäß Stufe (ii) einzubringen.

Diese Kombination verbesserter Eigenschaften ist für die Verwendung der erfindungsgemäßen Lithium-Ionen-Batterie im Lade-/Entlade-Betrieb als Antriebskraft für mobile Informationsvorrichtungen, für Werkzeuge, elektrisch betriebene Automobile und für Automobile mit Hybridantrieb außerordentlich günstig.

### Beispiele

Eine 40 Ah Lithium-Batterie wurde mit einem Elektrolyt gefüllt. Dieser enthielt 0,5 Gew.% einer oberflächenaktiven Substanz (Novec^{®} FC-4430 der Firma 3M) bezogen auf den Elektrolyt. Novec^{®} FC-4430 enthält laut Sicherheitsdatenblatt fluoraliphatische polymere Ester (B).

Zum Vergleich wurde eine baugleiche Batterie mit dem gleichen Elektrolyt befüllt, der aber kein Novec^{®} FC-4430 enthielt (A).

Die Formationskapazitäten der beiden Batterien werden in der nachstehenden Tabelle miteinander verglichen:

| | 1. Ladekapazität | 1. Entladekapazität | Irreversibler Kapazitätsverlust | 2. Entladekapazität | AC Widerstand bei 1 kHz |
|---|---|---|---|---|---|
| | [Ah] | [Ah] | [%] | [Ah] | [mΩ] |
| A | 48,24 | 37,54 | 22,2 | 38,59 | 0,57 |
| B | 48,99 | 40,28 | 17,8 | 40,62 | 0,53 |

Bei der Entladekapazität, sowohl direkt nach dem Formierzyklus, als auch im zweiten Entladevorgang, war eine vergleichsweise deutlich höhere Kapazität und damit eine verminderte Kapazitätsreduzierung der Batterie zu beobachten, wenn der Elektrolyt die oberflächenaktive Substanz enthielt.

Der Wechselstrom-Innenwiderstand AC war in der Novec^{®} FC-4430-enthaltenden Batterie niedriger.

Überraschenderweise wies die Batterie mit Novec^{®} FC-4430 auch eine bessere Lagerstabilität auf, wenn sie bei höherer Temperatur, etwa 60°C, gelagert wurde.

In diesem Fall war der Kapazitätsverlust der Batterie enthaltend die oberflächenaktive Substanz nach einer achtwöchigen Lagerung bei 60 °C deutlich niedriger als bei der Batterie ohne oberflächenaktiver Substanz.

Vorteilhafterweise war auch der Gleichspannungs-Innenwiderstand der Batterie, welche die oberflächenaktive Substanz enthielt, niedriger als bei der Batterie, die keine oberflächenaktive Substanz enthielt.

Die entsprechenden Werte werden in der nachstehenden Tabelle miteinander verglichen (Mittelwert der Ergebnisse, die an jeweils zwei Batterien durchgeführt wurden):

| | Irreversibler Kapazitätsverlust nach 5 Wochen Lagerung bei 60 °C | Irreversibler Kapazitätsverlust nach 10 Wochen Lagerung bei 60 °C | DC Innenwiderstand nach 5 Wochen Lagerung bei 60 °C | DC Innenwiderstand nach 10 Wochen Lagerung bei 60 °C |
|---|---|---|---|---|
| | [%] | [%] | [mΩ] | [mΩ] |
| A | 43,17 | 57,87 | 5,08 | 6,64 |
| B | 24,70 | 41,08 | 3,10 | 3,95 |

Aus den Ergebnissen lässt sich zeigen, dass beim Füllen der relativ großen Batterien mit Elektrolyt Probleme mit der Durchtränkung der Poren der Elektroden und des Separators auftreten, falls die Befüllung in Abwesenheit der oberflächenaktiven Substanz durchgeführt wird.

## Patentansprüche

1. Lithium-Ionen-Batterie, umfassend Komponenten (a) bis (e):
(a) Anode;
(b) Kathode;
(c) Separator;
(d) Elektrolyt, welcher ein Lithium-Salz und ein nicht-wässeriges Lösungsmittel umfasst;
(e) zumindest eine fluorhaltige nichtionische oberflächenaktive Substanz;
**dadurch gekennzeichnet, dass**
der Separator (c) ein Vlies aus ungewebten Polymerfasern umfasst, welches ein- oder beidseitig mit einem anorganischen Material beschichtet ist; und wobei die fluorhaltige nichtionische oberflächenaktive Substanz (e) ausgewählt ist aus fluorhaltigen Carbonsäureestern, Carbonsäureamiden, Sulfonsäureestern, Sulfonsäureamiden, Alkylpolyethylenglykolen und -ethern, Polyalkylenglykolethern.

2. Lithium-Ionen-Batterie nach Anspruch 1, wobei das für die Beschichtung verwendete Material wenigstens eine Verbindung aus der Gruppe der Oxide, Phosphate, Sulfate, Titanate, Alumosilkate wenigstens eines der Elemente Zirkon, Aluminium oder Lithium ist.

3. Lithium-Ionen-Batterie nach Anspruch 1 oder 2, wobei das Lithium-Salz ausgewählt ist aus LiPF₆, LiBF₄, LiClO₄, LiAsF₆, LiCF₃SO₃, LiN(CF₃SO₂)₂, LiC(CF₃SO₂)₃, LiSO₃CₓF₂ₓ₊₁, LiN(SO₂CₓF₂ₓ₊₁)₂ oder LIC(SO₂CₓF₂ₓ₊₁)₃ mit 0 ≤ x ≤ 8, und Mischungen von zwei oder mehreren dieser Salze.

4. Lithium-Ionen-Batterie nach einem der vorstehenden Ansprüche, wobei das nichtwässerige Lösungsmittel ausgewählt ist aus Ethylencarbonat, Propylencarbonat, Butylencarbonat, Dimethylcarbonat, Diethylcarbonat, Ethylmethylcarbonat, Methylpropycarbonat, Butylmethylcarbonat, Ethylpropylcarbonat, Dipropylcarbonat, Cyclopentanone, Sulfolane, Dimethylsufoxid, 3-Methyl-1,3-oxazolidine-2-on, γ-Butyrolacton, 1,2-Diethoxymethan, Tetrahydrofuran, 2-Methyltetrahydrofuran, 1,3-Dioxolan, Methylacetat, Ethylacetat, Nitromethan, 1,3-Propansulton, und Mischungen aus zwei oder mehreren dieser Lösungsmittel.

5. Lithium-Ionen-Batterie nach einem der vorstehenden Ansprüche, wobei die fluorhaltige nichtionische oberflächenaktive Substanz (e) eine Perfluoralkylgruppe aufweist.

6. Lithium-Ionen-Batterie nach einem der vorstehenden Ansprüche, wobei 0,001 bis 10 Gew.-% fluorhaltige nichtionische oberflächenaktive Substanz (e) bezogen auf die Gesamtmenge an Elektrolyt eingesetzt werden, vorzugsweise 0,05 bis 5 Gew.-%, besonders bevorzugt 0,1 bis 1 Gew.-%.

7. Verwendung einer Lithium-Ionen-Batterie nach einem der vorstehenden Ansprüche zur Verminderung des irreversiblen Kapazitätsverlusts bei der Formatierung der Batterie, wobei der irreversible Kapazitätsverlust bei der Formatierung der Batterie niedriger ist als der irreversible Kapazitätsverlust der Batterie, wenn diese in Abwesenheit der fluorhaltigen nichtionischen oberflächenaktiven Substanz (e) formatiert wird.

8. Verwendung nach Anspruch 7, wobei der irreversible Kapazitätsverlust höchstens 95 % des irreversiblen Kapazitätsverlusts der Batterie beträgt, wenn diese in Abwesenheit der fluorhaltigen nichtionischen oberflächenaktiven Substanz (e) formatiert wird, vorzugsweise höchstens 90 %, besonders bevorzugt höchstens 85 %.

9. Verwendung nach Anspruch 7 oder 8, wobei der Wechselstrom-Innenwiderstands bei der Formatierung der Batterie niedriger ist als der Wechselstrom-Innenwiderstan der Batterie, wenn diese in Abwesenheit der fluorhaltigen nichtionischen oberflächenaktiven Substanz (e) formatiert wird; und/oder der irreversible Kapazitätsverlust der Batterie nach Lagerung der Batterie niedriger ist als der irreversible Kapazitätsverlust der Batterie, wenn diese in Abwesenheit der fluorhaltigen nichtionischen oberflächenaktiven Substanz (e) gelagert wird; und/oder der Gleichspannungs-Innenwiderstand nach Lagerung der Batterie niedriger ist als der Gleichspannungs-innenwiderstands, wenn diese in Abwesenheit der fluorhaltigen nichtionischen oberflächenaktiven (e) Substanz gelagert wird.

10. Verfahren zum Herstellen einer Lithium-Ionen-Batterie, wie in einem der Ansprüche 1 bis 6 definiert, umfassend die Stufen (i) und (ii):
(i) Einbringen der fluorhaltigen nichtionischen oberflächenaktiven Substanz (e) in die Batterie umfassend die Komponenten (a) bis (c);
(ii) Einbringen des Elektrolyten (d) in die Batterie.

11. Verfahren nach Anspruch 10, wobei
Stufe (i) gleichzeitig mit Stufe (ii) ausgeführt wird; oder
Stufe (i) vor Stufe (ii) ausgeführt wird; oder
Stufe (i) nach Stufe (ii) ausgeführt wird.

12. Verwendung einer Lithium-Ionen-Batterie nach einem der Ansprüche 1 bis 6 im Lade-/Entlade-Betrieb als Antriebskraft für mobile Informationsvorrichtungen, für Werkzeuge, elektrisch betriebene Automobile und für Automobile mit Hybridantrieb.

## Claims

1. A lithium ion battery comprising components (a) to (e):
(a) anode;
(b) cathode;
(c) separator;
(d) electrolyte comprising a lithium salt and a non-aqueous solvent;
(e) at least one fluorinated non-ionic surfactant;
**characterized in that**
the separator (c) comprises a non-woven fabric of polymer fibers coated on one or both sides with an inorganic material; and wherein the fluorinated non-ionic surfactant (e) is selected from among fluorinated carboxylic acid esters, carboxylic acid amides,
sulfonic acid esters, sulfonic acid amides, alkyl polyethylene glycols and ethers, and polyalkylene glycol ethers.

2. The lithium ion battery according to claim 1, wherein the material used for the coating is at least one compound from among the group of: oxides, phosphates, sulfates, titanates and aluminosilicates of at least one of the elements of Zr, Al, or Li.

3. The lithium ion battery according to claim 1 or 2, wherein the lithium salt is selected from among LiPF₆, LiBF₄, LiClO₄, LiAsF₆, LiCF₃SO₃, LiN(CF₃SO₂)₂, LiC(CF₃SO₂)₃, LISO₃CₓF₂ₓ₊₁, LiN(SO₂CₓF₂ₓ₋₁)₂ or LiC(SO₂CₓF₂ₓ₊₁)₃, with 0 ≤ x ≤ 8, and mixtures of two or more of these salts.

4. The lithium ion battery according to any one of the preceding claims, wherein the non-aqueous solvent is selected from among ethylene carbonate, propylene carbonate, butylene carbonate, dimethyl carbonate, diethyl carbonate, ethylmethyl carbonate, methylpropyl carbonate, butylmethyl carbonate, ethylpropyl carbonate, dipropyl carbonate, cyclopentanone, sulfolane, dimethyl sulfoxide, 3-methyl-1,3-oxazolidine-2-one, γ-butyrolactone, 1,2-diethoxymethane, tetrahydrofuran, 2-methyltetrahydrofuran, 1,3-dioxolane, methylacetate, ethylacetate, nitromethane, 1,3-propane sultone, and mixtures of two or more of these solvents.

5. The lithium ion battery according to any one of the preceding claims, wherein the fluorinated non-ionic surfactant (e) comprises a perfluoroalkyl group.

6. The lithium ion battery according to any one of the preceding claims, wherein 0.001 to 10 wt-%, preferably 0.05 to 5 wt-%, particularly preferentially 0.1 to 1 wt-%, of fluorinated non-ionic surfactant (e) is used relative to the total amount of electrolyte.

7. Use of a lithium ion battery according to any one of the preceding claims to lower the irreversible capacitance loss when formatting the battery, wherein the fluorinated non-ionic surfactant is selected such that the irreversible capacitance loss when formatting the battery is lower than the battery's irreversible capacitance loss when the battery is formatted without the surfactant (e).

8. The use according to claim 7, wherein the irreversible capacitance loss is at most 95%, preferably at most 90%, particularly preferentially at most 85%, of the irreversible capacitance loss of the battery when it is formatted without the fluorinated non-ionic surfactant (e).

9. The use according to claim 7 or 8, wherein the internal resistance of the alternating current when formatting the battery is lower than the internal resistance of the alternating current of the battery when formatted without the fluorinated non-ionic surfactant (e); and/or the irreversible capacitance loss of the battery is lower after storage of the battery than the battery's irreversible capacitance loss when said battery is stored without the fluorinated non-ionic surfactant (e); and/or the internal resistance of the direct current voltage is lower after storage of the battery than the internal resistance of the direct current voltage when said battery is stored without the fluorinated non-ionic surfactant (e).

10. A method of manufacturing a lithium ion battery as defined in any one of claims 1 to 6, comprising the steps of (i) and (ii):
(i) introducing the fluorinated non-ionic surfactant (e) into the battery comprising components (a) to (c);
(ii) introducing electrolyte (d) into the battery.

11. The method according to claim 10, wherein
step (i) is performed simultaneously with step (ii); or
step (i) is performed prior to step (ii); or
step (i) is performed subsequent to step (ii).

12. Use of a lithium ion battery in accordance with any one of claims 1 to 6, or use of a lithium ion battery manufactured according to any one of claims 10 or 11 in a charge/ discharge operation to provide driving power for mobile information apparatus, tools, electrically driven automobiles and automobiles with hybrid drive.

## Revendications

1. Batterie lithium-ion, comprenant des composants (a) à (e):
(a) une anode ;
(b) une cathode ;
(c) un séparateur ;
(d) un électrolyte, qui comprend un sel de lithium et un solvant non aqueux ;
(e) au moins une substance tensioactive, non ionique, fluorée,
**caractérisée en ce que**
le séparateur (c) comprend un non-tissé constitué de fibres polymères non tissées, qui est recouvert d'un côté ou des deux côtés d'une couche de matériau inorganique, et **en ce que** la substance tensioactive, non ionique, fluorée (e) est choisie parmi les esters d'acide carboxylique fluorés, les amides d'acide carboxylique fluorés, les esters d'acide sulfonique fluorés, les amides d'acide sulfonique fluorés, les alkylpolyéthylèneglycols fluorés, les éthers d'alkylpolyéthylèneglycol fluorés, les éthers de polyalkylèneglycol fluorés.

2. Batterie lithium-ion selon la revendication 1, dans laquelle le matériau utilisé pour le revêtement est au moins un composé issu du groupe des oxydes, des phosphates, des sulfates, des titanates, des aluminosilicates d'au moins un des éléments parmi le zirconium, l'aluminium ou le lithium.

3. Batterie lithium-ion selon la revendication 1 ou 2, dans laquelle le sel de lithium est choisi parmi LiPF6, LiBF4, LiClO₄, LiAsF6, LiCF₃SO₃, LiN(CF3SO2)2, LiC(CF3SO2)3, LiSO3CxF2x+1, LiN(S02CxF2x+1)2 ou LiC(S02CxF2x+1)3 avec 0 ≤ x ≤ 8, et des mélanges de deux ou plus desdits sels.

4. Batterie lithium-ion selon l'une quelconque des revendications précédentes, dans laquelle le solvant non aqueux est choisi parmi le carbonate d'éthylène, le carbonate de propylène, le carbonate de butylène, le carbonate de diméthyle, le carbonate de diéthyle, le carbonate d'éthylméthyle, le carbonate de méthylpropyle, le carbonate de butylméthyle, le carbonate d'éthylpropyle, le carbonate de dipropyle, le cyclopentanone, le sulfolane, le diméthylsulfoxyde, le 3-méthyle-1,3-oxazolidine-2-one, la gamma-butyrolactone, le 1-2-diéthoxyméthane, le tétrahydrofurane, le 2-méthyltétrahydrofurane, le 1,3 dioxalane, l'acétate de méthyle, l'acétate d'éthyle, le nitrométhane, le 1,3-sultone de propane, et des mélanges de deux ou plus desdits solvants.

5. Batterie lithium-ion selon l'une quelconque des revendications précédentes, dans laquelle la substance tensioactive non ionique fluorée (e) présente un groupe perfluoroalkyle.

6. Batterie lithium-ion selon l'une quelconque des revendications précédentes, dans laquelle on utilise de 0,001 à 10 % en poids de substances tensioactive non ionique fluorée (e) par rapport à la quantité totale en électrolyte, de préférence 0,05 à 5 % en poids, de manière particulièrement préférée 0,1 à 1 % en poids.

7. Utilisation d'une batterie lithium-ion telle que définie dans l'une quelconque des revendications précédentes pour réduire la perte de capacité irréversible lors du formatage de la batterie, dans laquelle la perte de capacité irréversible lors du formatage de la batterie est inférieure à la perte de capacité irréversible de la batterie lorsque celle-ci est formatée en l'absence de la substance tensioactive non ionique fluorée (e).

8. Utilisation selon la revendication 7, dans laquelle la perte de capacité irréversible est au maximum égale à 95 % de la perte de capacité irréversible de la batterie, lorsque celle-ci est formatée en l'absence de la substance tensioactive non ionique fluorée (e), de préférence égale au maximum à 90 %, de manière particulièrement préférée au maximum égale à 85 %.

9. Utilisation selon la revendication 7 ou 8, dans laquelle la résistance interne de courant alternatif lors du formatage de la batterie est inférieure à la résistance interne de courant alternatif de la batterie lorsque celle-ci est formatée en l'absence de la substance tensioactive non ionique fluorée, et/ou la perte de capacité irréversible de la batterie après le stockage de la batterie est inférieure à la perte de capacité irréversible de la batterie lorsque celle-ci est stockée en l'absence de la substance tensioactive non ionique fluorée (e), et/ou la résistance interne de tension continue après le stockage de la batterie est inférieure à la résistance interne de tension continue lorsque celle-ci est stockée en l'absence de la substance tensioactive non ionique fluorée (e).

10. Procédé pour fabriquer une batterie lithium-ion, telle que définie selon l'une quelconque des revendications 1 à 6, comprenant les étapes (i) et (ii) suivantes :
(i) introduire la substance tensioactive non ionique fluorée (e) dans la batterie comprenant les composants (a) à (c) ;
(ii) introduire l'électrolyte (d) dans la batterie.

11. Procédé selon la revendication 10, dans lequel
l'étape (i) est exécutée en même temps que l'étape (ii) ; ou
l'étape (i) est exécutée avant l'étape (ii) ; ou
l'étape (i) est exécutée après l'étape (ii).

12. Utilisation d'une batterie lithium-ion telle que définie dans l'une quelconque des revendications 1 à 6, en mode charge/décharge en tant que force d'entraînement pour des dispositifs d'information mobiles, pour des outils, des automobiles électriques et des automobiles équipées d'un entraînement hybride.
